# EUROPÄISCHE PATENTSCHRIFT

(11) **EP 0 855 781 B1**
(45) Veröffentlichungstag und Bekanntmachung des Hinweises auf die Patenterteilung: **07.11.2001**
(21) Anmeldenummer: 97810996.5
(22) Anmeldetag: 17.12.1997
(51) Int. Cl.: H02K 1/28, H02K 13/00

(54) **Elektromotor mit Kommutator**
Electromotor having a collector
Moteur électrique à collecteur

(30) Priorität: 27.01.1997 DE 19702737
(43) Veröffentlichungstag der Anmeldung: 29.07.1998
(73) Patentinhaber: HILTI Aktiengesellschaft, 9494 Schaan (LI)
(72) Erfinder: Kristen, Ferdinand, 82205 Gilching (DE); Appel, Hans, 81377 München (DE)
(74) Vertreter: Wildi, Roland

(56) Entgegenhaltungen:
- WO-A-81/01083
- DE-A- 2 543 549
- DE-A- 2 649 121
- DE-A- 4 432 356
- US-A- 2 319 692
- US-A- 4 663 835

## Beschreibung

Die Erfindung betrifft einen Elektromotor gemäss dem Oberbegriff des Patentanspruchs 1.

Aus der DE-OS 25 43 549 ist ein Elektromotor für Handwerkzeuggeräte bekannt, der beispielsweise als Antriebsmotor für Bohr- und Meisselgeräte eingesetzt wird. Da das Blechpaket und das Stromverteilungselement in Form eines Kommutators unterschiedliche Trägheitsmomente besitzen treten insbesondere beim Anlaufen bzw. beim Abbremsen des Elektromotors beim Blechpaket und beim Stromverteilungselement unterschiedlich grosse Beschleunigungskräfte auf, die zu einer gegenseitigen Verdrehung von Blechpaket und Stromverteilungselement führen können. Um eine derartige gegeseitige Verdrehung verhindern zu können sind das Blechpaket und das Stromverteilungselement dieses bekannten Elektromotors unter Zwischenlage eines Stahlrohres mittels einer Isolationsschicht drehfest auf der Rotorwelle angeordnet.

Da das Stromverteilungselement segmentartige Abschnitte aufweist, von denen jedes mit einem Rotorpol zusammenwirkt muss eine Ausrichtung der einzelnen Abschnitte des Stromverteilungselementes gegenüber den Rotorpolen des Blechpaketes in Umfangsrichtung erfolgen. Dies wird bei diesem bekannten Elektromotor mit Hilfe des Stahlrohres erreicht, auf dem das Blechpaket und das Stromverteilungselement drehfest aufgepresst wird, bevor das Stahlrohr unter Zwischenlage der Isolationsschicht drehfest mit der Rotorwelle verbunden wird. Die Isolationsschicht kann beispielsweise als Kunststoffhülse ausgebildet sein die zwischen dem Stahlrohr und der Rotorwelle eingeklebt ist. Klebstoffverbindungen haben den Nachteil, dass sie insbesondere bei hohen Motortemperaturen zerstört werden und somit zu einer Beschädigung des Elektromotors führen. Es ist auch möglich die Isolationsschicht zwischen das Stahlrohr und die Rotorwelle einzuspritzen. Bei dieser Art der Anbringung der Isolationsschicht muss zuerst das Stahlrohr und die Rotorwelle in eine Haltevorrichtung eingesetzt werden, in der das Stahlrohr gegenüber der Rotorwelle so gehalten wird, dass sich ein zylinderförmiger Luftspalt zwischen diesen beiden Teilen bildet. Beim anschliessenden Einspritzen der Isolationsschicht ist ein sehr grosser apparativer Aufwand notwendig und das Abkühlen der Isolationsschicht benötigt sehr viel Zeit.

Die US4663835 offenbart zwei koaxial hintereinander angeordnete Hülsenteile, welche dem Blechpaket bzw. dem Stromverteilungselement zugeordnet und mit diesen drehfest verbunden sind. Das mit dem Blechpaket verbundene Hülsenteil weist ein Mitnahmeprofil auf, das umfänglich formschlüssig drehfest mit einem Gegenprofil des Blechpakets zusammenwirkt. Die DE-OS2649121 offenbart eine derartige umfänglich formschlüssig drehfeste Verbindung mit einem Gegenprofil des Stromverteilungselements. Eine umfänglich formschlüssig drehfeste Verbindung zweier Hülsenteile an ihren jeweils zugeordneten Stirnflächen ist zudem aus der WO81/01083 vorbekannt.

Aufgabe der Erfindung ist es einen Elektromotor zu schaffen, dessen Isolationsschicht wirtschaftlich herstellbar, sowie schnell, einfach und drehfest mit der Rotorwelle in Verbindung bringbar ist. Die Isolationsschicht soll weiters eine einfache Ausrichtung des Stromverteilungselementes gegenüber dem Blechpaket, sowie eine drehfeste Anordung des Blechpaketes und des Stromverteilungselementes auf der Rotorwelle, ermöglichen. Das Gesamtgewicht des Elektromotors soll so gering wie möglich sein.

Die Lösung dieser Aufgabe erfolgt durch einen Elektromotor, welcher die im kennzeichnenden Abschnitt des Patentanspruchs 1 angeführten Merkmale aufweist.

Um eine drehfeste Verbindung des Blechpaketes gegenüber dem Stromverteilungselementes bzw. des ersten Hülsenteiles gegenüber dem zweiten Hülsenteil erreichen zu können wirkt vorteilhafterweise zwischen den beiden Hülsenteilen eine in Umfangsrichtung formschlüssig zusammenwirkende Verbindung.

Um zusätzliche Profilierungen im Bereich der einander zugewandten Stirnseiten der beiden Hülsenteile vermeiden zu können, erfolgt vorzugsweise die formschlüssige Verbindung zwischen beiden Hülsenteilen über das an der Aussenseite des ersten Hülsenteiles angeordnete erste Mitnahmeprofil und ein an der Innenseite eines, das erste Hülsenteil teilweise überlappenden Bereiches des zweiten Hülsenteiles angeordnetes Verbindungsprofil.

Die erfindungsgemässe Ausgestaltung der Isolationsschicht in Form zweier koaxial hintereinander angeordneter Hülsenteile vereinfacht die Montage des Blechpaketes und des Stromverteilungselementes auf der Rotorwelle, und erleichtert die Ausrichtung des Stromverteilungselementes gegenüber dem Blechpaket in Umfangsrichtung. Beispielsweise ist es möglich zuerst das Blechpaket mit dem ersten Hülsenteil auf der Rotorwelle drehfest anzuordnen und das zweite Hülsenteil mit dem Stromverteilungselement gegenüber dem Blechpaket auszurichten bevor dieses zusammen mit dem zweiten Hülsenteil auf der Rotorwelle ebenfalls drehfest angeordnet wird. Die beiden Hülsenteile haben aufgrund ihrer kurzen Baulänge eine sehr hohe Knickfestigkeit, sodass sie beispielsweise auf der Rotorwelle durch Aufpressen festlegbar sind.

Damit sich das mit dem ersten Hülsenteil in Verbindung stehende Blechpaket durch die auf den Elektromotor wirkenden, grossen mechanischen Belastungen gegenüber dem ersten Hülsenteil nicht verdreht, ist zweckmässigerweise die drehfeste Verbindung zwischen dem ersten Hülsenteil und dem Blechpaket von einem an der Aussenseite des ersten Hülsenteiles angeordneten ersten Mitnahmeprofil und einem an einer Innenseite des Blechpaketes angeordneten, mit dem ersten Mitnahmeprofil formschlüssig zusammenwirkenden ersten Gegenprofil gebildet.

Um verhindern zu können, dass sich das Stromverteilungselement gegenüber dem zweiten Hülsenteil verdreht, wenn mechanische, auf den Elektromotor wirkende Belastungen auftreten, ist vorzugsweise die drehfeste Verbindung zwischen dem zweiten Hülsenteil und dem Stromverteilungselement von einem an der Aussenseite des zweiten Hülsenteiles angeordneten zweiten Mitnahmeprofil und einem an einer Innenseite des Stromverteilungselementes angeordneten, mit dem zweiten Mitnahmeprofil formschlüssig zusammenwirkenden zweiten Gegenprofil gebildet.

Es ist beispielsweise möglich, bei der Herstellung der formschlüssigen Verbindung zwischen den beiden Hülsenteilen das Stromverteilungselement gegenüber dem Eisenpaket auszurichten. Dazu ist es allerdings notwendig, dass zuvor das Blechpaket gegenüber dem ersten Mitnahmeprofil und das Stromverteilungselement gegenüber dem Verbindungsprofil in einer bestimmten Lage auf das erste Hülsenteil bzw. das zweite Hülstenteil aufgebracht werden.

Zweckmässigerweise sind das erste Mitnahmeprofil von wenigstens einem, sich parallel zur Längsachse der Rotorwelle erstreckenden Vorsprung und das erste Gegenprofil, sowie das Verbindungsprofil von wenigstens einer auf das erste Mitnahmeprofil abgestimmten Vertiefung gebildet. Aufgrund der Ausgestaltung des ersten Mitnahmeprofiles als Vorsprung ist es möglich die Wandstärke, insbesondere des mit dem zweiten Hülsenteil zusammenwirkenden Teiles des ersten Hülsenteiles, sowie des mit dem Blechpaket in Verbindung stehenden Aufnahmebereiches des ersten Hülsenteiles gering auszubilden. Die Vertiefungen sind beispielsweise an der Innenseite einer zentralen Durchgangsbohrung des Blechpaketes und an der Innenseite einer Aufnahmebohrung des zweiten Hülsenteiles angeordnet. Sowohl das Blechpaket als auch das zweite Hülsenteil weisen im Bereich der Vertiefungen grosse radiale Erstreckungen auf.

Insbesondere bei zweiten Hülsenteilen mit kurzer Baulänge können das in der Aufnahmebohrung angeordnete Verbindungsprofil und das zweite Mitnahmeprofil übereinander zu liegen kommen. Dadurch, das vorzugsweise das zweite Mitnahmeprofil von wenigstens einer, sich parallel zur Längsachse der Rotorwelle erstreckenden Vertiefung und das zweite Gegenprofil von wenigstens einem auf das zweite Mitnahmeprofil abgestimmten Vorsprung gebildet sind, wird eine geringe Wandstärke zwischen den beiden vorgenannten Profilierungen vermieden, die gegebenenfalls zu einer Beschädigung des zweiten Hülsenteiles führt.

Das erste und das zweite Mitnahmerprofil können jeweils von wenigstens einem auf der Aussenseite der beiden Hülsenteile angeordneten Vorsprung gebildet sein. Das erste und das zweite Gegenprofil, sowie das Verbindungsprofil können jeweils von wenigstens einer an einer Innenseite des Blechpaketes, des Stromverteilungselementes, sowie des zweiten Hülsenteiles angeordneten Vertiefung gebildet sein.

Nach dem Zusammensetzen des Rotors ist es wichtig diesen auszuwuchten, bevor dieser zusammen mit dem Stator und weiteren Bauteilen zu einem Elektromotor zusammengebaut wird. Damit ein Auswuchten des Rotors möglich ist, stehen vorteilhafterweise die Hülsenteile mit Wuchtmassen in Verbindung.

Das Auswuchten erfolgt in der Weise dass von den Wuchtmasse in jenem Umfangsbereich an dem die grössten Fliehkräfte auftreten Material abgetragen wird, indem Sacklochbohrungen in die Wuchtmasse gebohrt werden. Die Wuchtmassen können beispielsweise gebildet sein von wenigstens einer Einzelwuchtmasse pro Hülsenteil, die jeweils in einem dem Blechpaket naheliegenden Bereich angeordnet sind. Die Einzelwuchtmassen könne Teil der Hülsenteile sein.

Die Erfindung wird anhand von Zeichnungen, die ein Ausführungsbeispiel wiedergeben näher erläutert. Es zeigen:
- Fig. 1: eine erfindungsgemässe Rotorwelle, teilweise geschnitten;
- Fig.2: einen Schnitt durch die Rotorwelle gemäss Fig. 1 entlang der Linie A-A;
- Fig. 3: einen Schnitt durch die Rotorwelle gemäss Fig. 1 entlang der Linie B-B;
- Fig. 4: einen Schnitt durch die Rotorwelle gemäss Fig. 1 entlang der Linie C-C.

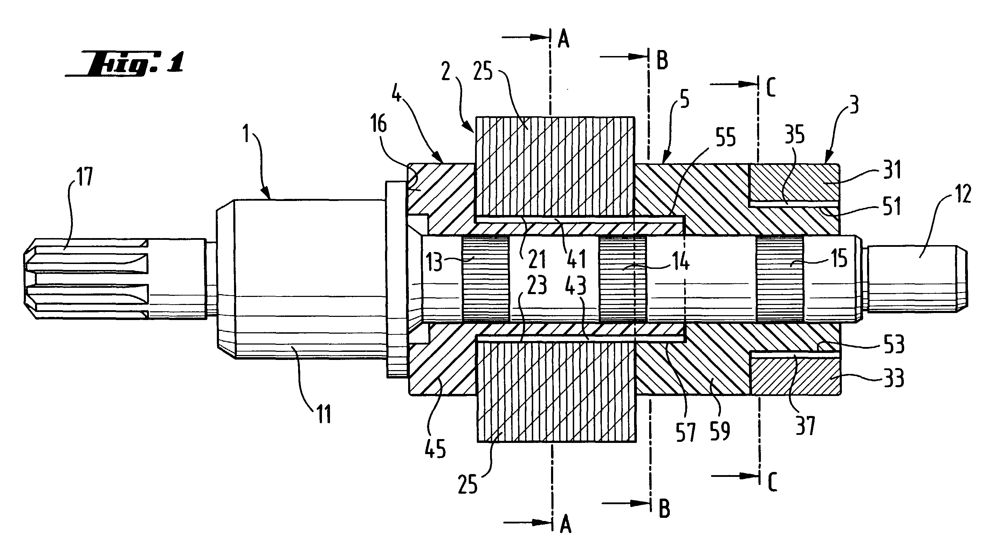

Die Fig. 1 zeigt einen erfindungsgemässe Rotor eines nicht näher dargestellten Elektromotors. Der Rotor weist eine Rotorwelle 1, ein Blechpaket 2, ein Stromverteilungselement 3 und eine aus zwei Hülsenteilen 4, 5 bestehende Isolationsschicht auf. An einem ersten freien Ende ist die Rotorwelle 1 mit einer Verzahnung 17 versehen, die dem Übertragen der vom Elektromotor erzeugten Drehbewegung auf ein anzutreibendes, ebenfalls nicht dargestelltes Bauteil dient. An die Verzahnung 17 schliesst sich eine mit einem nicht dargestellten Rillenkugellager zusammenwirkende erste Lagerfläche 11 an, die im wesentlich zylindrisch ausgebildet ist und deren Durchmesser den Kopfkreisdurchmesser der Verzahnung 17 radial überragt. Die Rotorwelle 1 weist an einem der Verzahnung 17 abgewandten Endbereich der ersten Lagerfläche 11 eine flanschartige Erweiterung mit einer von der Verzahnung 17 abgewandten Anschlagfläche 16 auf. Ausgehend von dieser flanschartigen Erweiterung setzt sich die Rotorwelle 1 mit einem zylindrischen Aufnahmebereich fort, dessen Durchmesser im wesentlichen dem Kopfkreisdurchmesser der Verzahnung 17 entspricht. Der Aufnahmebereich weist beispielsweise drei im Abstand voneinander angeordnete mit einem Rändel 13, 14, 15 versehene Abschnitte auf, die insbesondere der reibschlüssigen Festlegung der beiden Hülsenteile 4, 5 auf der Rotorwelle 1 dienen. Das der Verzahnung 17 gegenüberliegende, freie Ende der Rotorwelle 1 weist eine zweite mit einem ebenfalls nicht dargestellten Rillenkugellager zusammenwirkende Lagerfläche 12 in Form eines zylindrischen Zapfens auf, dessen Durchmesser geringer ist als der Durchmesser des Aufnahmebereiches.

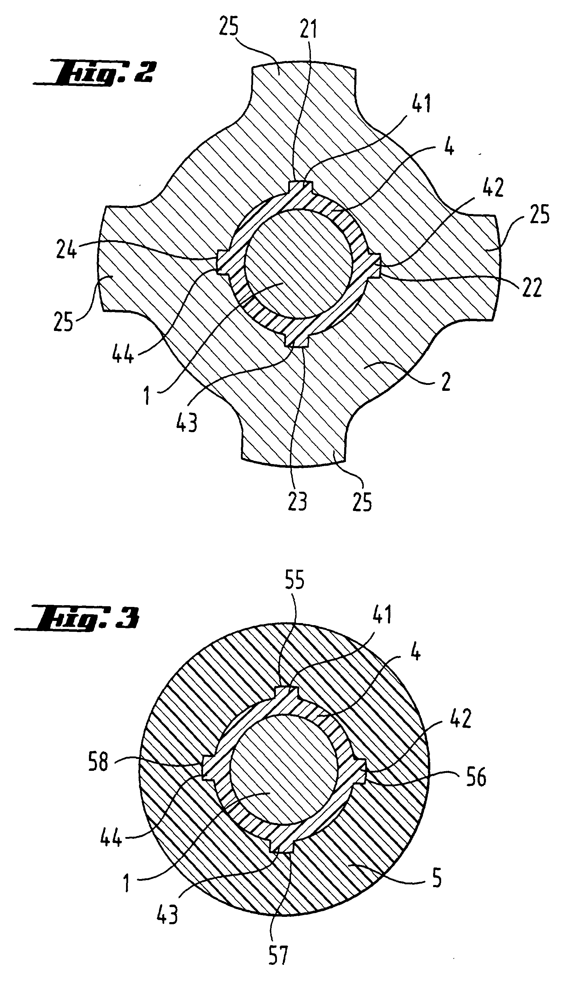

Der Isolation des Blechpaketes 2 und des Stromverteilungselementes 3 gegenüber der Rotorwelle 1 dient die in den Fig. 2 bis 4 näher dargestellte, sich von einem ersten Hülsenteil 4 und einem zweiten Hülsenteil 5 gebildete Isolationsschicht. Ein Teil des ersten Hülsenteiles 4 durchsetzt das Blechpaket 2. An dem das Blechpaket 2 durchsetzenden Teil des ersten Hülsenteiles 4 ist gemäss Fig. 2 ein erstes Mitnahmeprofil 41, 42, 43, 44 in Form mehrerer, sich parallel zur Längsachse der Rotorwelle 1 erstreckender, in Umfangsrichtung im wesentlichen gleichmässig an der Aussenkontur verteilter Vorsprünge angeordnet, das mit einem entsprechend angeordneten, bzw ent sprechend ausgebildeten ersten Gegenprofil 21, 22, 23, 24 des Blechpaketes 2 zusammenwirkt.

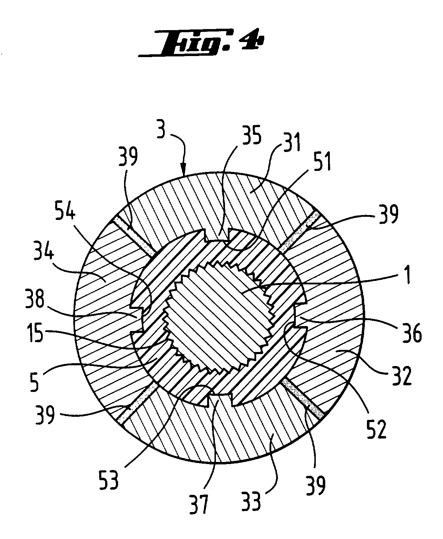

Der das Blechpaket 2 überragende Teil des ersten Hülsenteiles 4 ragt wenigstens teilweise in eine Aufnahmebohrung des zweiten Hülsenteils 5 und wirkt dabei gemäss Fig. 3 in Umfangsrichtung dreh- und formschlüssig mit seinem ersten Mitnahmeprofil 41, 42, 43, 44 mit einem Verbindungsprofil 55, 56, 57, 58 zusammen, das an der Innenseite der Aufnahmebohrung angeordnet, sowie auf das erste Mitnahmeprofil 41, 42, 43, 44 abgestimmt ist und mehrere parallel zur Längsachse der Rotorwelle 1 erstreckende Vertiefungen aufweist. Das erste Mitnahmeprofil 41, 42, 43, 44, das zweite Mitnahmeprofil 51, 52, 53, 54, das erste Gegenprofil 21, 22, 23, 24, das zweite Gegenprofil 35, 36, 37, 38 und das Verbindungsprofil 55, 56, 57, 58 können von mehreren Vorsprüngen bzw. Vertiefungen gebildet sein. Das Blechpaket 2 weist vier gleichmässig am Umfang verteilt angeordnete Rotorpole 25 auf.

Das vier segmentartige Abschnitte 31, 32, 33, 34 aufweisende Stromverteilungselement 3 ist drehfest mit dem zweiten Hülsenteil 5 verbunden. Die drehfeste Verbindung zwischen dem zweiten Hülsenteil 5 und dem Stromverteilungselement 3 wird erreicht mittels einem zweiten Mitnahmeprofil 51, 52, 53, 54 an der Aussenseite des zweiten Hülsenteiles 5 und einem zweiten Gegenprofil 35, 36, 37, 38 an dem Stromverteilungselement 3.

Das zweite Mitnahmeprofil 51, 52, 53, 54 weist vier parallel zur Längsachse der Rotorwelle 1 erstreckende, in Umfangsrichtung im wesentlichen gleichmässig an der Aussenkontur des Abschnitts verteilte Vertiefungen auf. Das zweite Gegenprofil 35, 36, 37, 38 wird gebildet von von vier Vorsprüngen, die auf die Vertiefungen des zweiten Mitnahmeprofils 51, 52, 53, 54 abgestimmt sind. Die segmentartigen Abschnitte 31, 32, 33, 34 werden von Lamellen aus Hartkupfer gebildet, die durch jeweils eine Isolation 39 voneinander getrennt sind. Das Stromverteilungselement kann beispielsweise auch von einem Ring gebildet sein, der mehrere gleichmässig am Umfang verteilt angeordnete Magnete aufweisen kann.

Der zwischen dem Blechpaket 2 und der Anschlagfläche 16 der Rotorwelle 1 angeordnete Abschnitt des ersten Hülsenteiles 4 dient als erste Einzelwuchtmasse 45 und der Abschnitt des zweiten Hülsenteiles 5 zwischen dem Blechpaket 2 und dem Stromverteilungselement 3 dient als zweite Einzelwuchtmasse 59. Im Bereich der Wuchtmassen 45, 59 weisen die beiden Hülsenteile 4, 5 grosse Wandstärken auf, die zum Zwecke des Auswuchtens des Rotors spanabhebend bearbeitet werden können.

## Patentansprüche

1. Elektromotor mit einem Stator und einem Rotor mit einer Rotorwelle (1) auf der ein Blechpaket (2) und ein Stromverteilungselement (3) angeordnet sind, wobei das Blechpaket (2) und das Stromverteilungselement (3) unter Zwischenlage einer Isolationsschicht koaxial und drehfest auf der Rotorwelle (1) angeordnet sind, die Isolationsschicht aus zwei auf der Rotorwelle (1) koaxial hintereinander angeordneten Hülsenteilen (4, 5) gebildet ist, wobei ein erstes Hülsenteil (4) mit einem an der Aussenseite des ersten Hülsenteiles (4) angeordneten ersten Mitnahmeprofil (41, 42, 43, 44) der Aufnahme des Blechpaketes (2) und ein zweites Hülsenteil (5) der Aufnahme des Stromverteilungselementes (3) dient, **dadurch gekennzeichnet, dass** zwischen beiden Hülsenteilen (4, 5) eine in Umfangsrichtung formschlüssig zusammenwirkende Verbindung besteht und dass die formschlüssige Verbindung über das an der Aussenseite des ersten Hülsenteiles (4) angeordnete erste Mitnahmeprofil (41, 42, 43, 44) und ein an der Innenseite eines das erste Hülsenteil (4) teilweise überlappenden Bereiches des zweiten Hülsenteiles (5) angeordnetes Verbindungsprofil (55, 56, 57, 58) erfolgt.

2. Elektromotor nach Anspruch 1, **dadurch gekennzeichnet, dass** die drehfeste Verbindung zwischen dem ersten Hülsenteil (4) und dem Blechpaket (2) von einem an der Aussenseite des ersten Hülsenteiles (4) angeordneten ersten Mitnahmeprofil (41, 42, 43, 44) und einem an einer Innenseite des Blechpaketes (2) angeordneten, mit dem ersten Mitnahmeprofil (41, 42, 43, 44) formschlüssig zusammenwirkenden ersten Gegenprofil (21, 22, 23, 24) gebildet ist.

3. Elektromotor nach Anspruch 1 oder 2, **dadurch gekennzeichnet, dass** die dreh-feste Verbindung zwischen dem zweiten Hülsenteil (5) und dem Stromverteilungselement (3) von einem an der Aussenseite des zweiten Hülsenteiles (5) angeordneten zweiten Mitnahmeprofil (51, 52, 53, 54) und einem an einer Innenseite des Stromverteilungselementes (3) angeordneten, mit dem zweiten Mitnahmeprofil (51, 52, 53, 54) formschlüssig zusammenwirkenden zweiten Gegenprofil (35, 36, 37, 38) gebildet ist.

4. Elektromotor nach einem der Ansprüche 1 bis 3, **dadurch gekennzeichnet, dass** das erste Mitnahmeprofil (41, 42, 43, 44) von wenigstens einem, sich parallel zur Längsachse der Rotorwelle (1) erstreckenden Vorsprung und das erste Gegenprofil (21, 22, 23, 24), sowie das Verbindungsprofil (55, 56, 57, 58) von wenigstens einer auf das erste Mitnahmeprofil (41, 42, 43, 44) abgestimmten Vertiefung gebildet sind.

5. Elektromotor nach Anspruch 3 oder Anspruch 4, **dadurch gekennzeichnet, dass** das zweite Mitnahmeprofil (51, 52, 53, 54) von wenigstens einer, sich parallel zur Längsachse der Rotorwelle (1) erstreckenden Vertiefung und das zweite Gegenprofil (35, 36, 37, 38) von wenigstens einem auf das zweite Mitnahmeprofil (51, 52, 53, 54) abgestimmten Vorsprung gebildet sind.

6. Elektromotor nach einem der Ansprüche 1 bis 5, **dadurch gekennzeichnet, dass** die Hülsenteile (4, 5) mit Wuchtmassen (45, 59) in Verbindung stehen.

## Claims

1. Electric motor with a stator and a rotor with a rotor shaft (1) on which are arranged a sheet-metal packet (2) and a current distribution element (3), and the sheet-metal packet (2) and the current distribution element (3) are arranged coaxially and non-rotationally on the rotor shaft (1) with an insulation layer thereinbetween, and the insulation layer is formed by two sleeve sections (4, 5) which are arranged coaxially one behind the other on the rotor shaft (1), and a first sleeve section (4) with a first pickup profile (41, 42, 43, 44) arranged on the outside of the first sleeve section (4) serves to accommodate the sheet-metal packet (2), and a second sleeve section (5) serves to accommodate the current distribution element (3), **characterised in that** between both sleeve sections (4, 5) exists a peripherally positive co-operating connection, and the positive connection is established by way of the first pickup profile (41, 42, 43, 44) arranged on the outside of the first sleeve section (4) and by way of a connecting profile (55, 56, 57,58) arranged on the inside of an area of the second sleeve section (5) which partially overlaps the first sleeve section (4).

2. Electric motor according to Claim 1, **characterised in that** the non-rotary connection between the first sleeve section (4) and the sheet-metal packet (2) is formed by a first pickup profile (41, 42, 43, 44) arranged on the outside of the first sleeve section (4) and a first counter profile (21, 22, 23, 24) arranged on the inside of the sheet-metal packet (2) and positively co-operating with the first pickup profile (41, 42, 43, 44).

3. Electric motor according to Claim 1 or 2, **characterised in that** the non-rotary connection between the second sleeve section (5) and the current distributing element (3) is formed by a second pickup profile (51, 52, 53, 54) arranged on the outside of the second sleeve section (5) and a second counter profile (35, 36, 37, 38) arranged on an inside of the current distribution element (3) which positively co-operates with the second pickup profile (51, 52, 53, 54).

4. Electric motor according to one of Claims 1 to 3, **characterised in that** the first pickup profile (41, 42, 43, 44) is formed by at least one protrusion which extends parallel to the longitudinal axis of the rotor shaft (1), and the first counter profile (21, 22, 23, 24) as well as the connecting profile (55, 56, 57, 58) are formed by at least one recess which is matched to the first pickup profile (41, 42, 43, 44).

5. Electric motor according to Claim 3 or Claim 4, **characterised in that** the second pickup profile (51, 52, 53, 54) is formed by at least one recess which extends parallel to the longitudinal axis of the rotor shaft (1), and the second counter profile (35, 36, 37, 38) is formed by at least one protrusion which is matched to the second pickup profile (51, 52, 53, 54).

6. Electric motor according to one of Claims 1 to 5, **characterised in that** the sleeve sections (4, 5) are in contact with momentum masses (45, 59).

## Revendications

1. Moteur électrique comprenant un stator et un rotor avec un arbre de rotor (1) sur lequel sont disposés un empilage de tôles (2) et un élément de répartition de courant (3), l'empilage de tôles (2) et l'élément de répartition de courant (3) étant montés coaxialement et solidaires en rotation sur l'arbre de rotor (1) avec interposition d'une couche isolante, la couche isolante étant formée de deux parties de manchon (4, 5) disposées coaxialement l'une derrière l'autre sur l'arbre de rotor (1), une première partie de manchon (4) pourvue d'un premier profil d'entraînement (41, 42, 43, 44) disposé sur sa face extérieure servant à recevoir l'empilage de tôles (2), et une seconde partie de manchon (5) servant à recevoir l'élément de répartition de courant (3), **caractérisé en ce qu'**il existe une liaison par complémentarité de formes dans la direction circonférentielle entre les deux parties de manchon (4, 5), et **en ce que** la liaison par complémentarité de formes s'effectue par l'intermédiaire du premier profil d'entraînement (41, 42, 43, 44) disposé sur la face extérieure de la première partie de manchon (4) et d'un profil de liaison (55, 56, 57, 58) disposé sur la face intérieure d'une zone de la seconde partie de manchon (5) chevauchant partiellement la première partie de manchon (4).

2. Moteur électrique selon la revendication 1, **caractérisé en ce que** la liaison en rotation entre la première partie de manchon (4) et l'empilage de tôles (2) est formée par un premier profil d'entraînement (41, 42, 43, 44) disposé sur la face extérieure de la première partie de manchon (4) et un premier contre-profil (21, 22, 23, 24) qui est disposé sur une face intérieure de l'empilage de tôles (2) et qui coopère par complémentarité de formes avec le premier profil d'entraînement (41, 42, 43, 44).

3. Moteur électrique selon la revendication 1 ou 2, **caractérisé en ce que** la liaison en rotation entre la seconde partie de manchon (5) et l'élément de répartition de courant (3) est formée par un second profil d'entraînement (51, 52, 53, 54) disposé sur la face extérieure de la seconde partie de manchon (5) et un second contre-profil (35, 36, 37, 38) qui est disposé sur une face intérieure de l'élément de répartition de courant (3) et qui coopère par complémentarité de formes avec le second profil d'entraînement (51, 52, 53, 54).

4. Moteur électrique selon l'une des revendications 1 à 3, **caractérisé en ce que** le premier profil d'entraînement (41, 42, 43, 44) est formé par au moins une saillie s'étendant parallèlement à l'axe longitudinal de l'arbre de rotor (1), et le premier contre-profil (21, 22, 23, 24) ainsi que le profil de liaison (55, 56, 57, 58) est formé par au moins un renfoncement adapté au premier profil d'entraînement (41, 42, 43, 44).

5. Moteur électrique selon la revendication 3 ou la revendication 4, **caractérisé en ce que** le second profil d'entraînement (51, 52, 53, 54) est formé par au moins un renfoncement s'étendant parallèlement à l'axe longitudinal de l'arbre de rotor (1), et le second contre-profil (35, 36, 37, 38) est formé par au moins une saillie adaptée au second profil d'entraînement (51, 52, 53, 54).

6. Moteur électrique selon l'une des revendications 1 à 5, **caractérisé en ce que** les parties de manchon (4, 5) sont en relation avec des masses d'équilibrage (45, 59).
